# EUROPÄISCHE PATENTSCHRIFT

(11) **EP 2 062 720 B1**
(45) Veröffentlichungstag und Bekanntmachung des Hinweises auf die Patenterteilung: **02.12.2009**
(21) Anmeldenummer: 07022479.5
(22) Anmeldetag: 20.11.2007
(51) Int. Cl.: B29C 65/00, B29C 65/02, G05D 1/02

(54) **Verfahren und Schweissautomat zum Verbinden Materialbahnen**
Method and welding device for connecting sheets of material
Procédé et automate de soudage destinés à la liaison de bandes de matériau

(43) Veröffentlichungstag der Anmeldung: 27.05.2009
(73) Patentinhaber: Leister Process Technologies, 6056 Kägiswil (CH)
(72) Erfinder: Zurbuchen, Reto, 6003 Luzern (CH); Gubler, Ulrich, 6006 Luzern (CH)
(74) Vertreter: Klocke, Peter

(56) Entgegenhaltungen:
- EP-A- 0 300 209
- EP-A- 1 371 474
- WO-A-2005/009665
- US-A- 3 080 910

## Beschreibung

Die vorliegende Erfindung betrifft ein Verfahren zum Verbinden von mit überlappenden Rändern angeordneten Materialbahnen, bei dem ein Schweißautomat mit einem Fahrgestell, Antriebseinheit und Schweißeinrichtung entlang der Überlappungszone der zu verbindenden Materialbahnen geführt wird und dabei die zu verbindenden Ränder von der Schweißeinrichtung miteinander verbunden werden, sowie einen entsprechend angepassten Schweißautomaten.

Derartige Schweißautomaten und damit ausführbare Schweißverfahren sind allgemein bekannt, vgl. EP 1371474. Sie werden beispielsweise zum Verschweißen von Bahnen aus kunststoffbeschichteten Gewebe, Kunststofffolien und Dichtungsbahnen aus Kunststoff eingesetzt. Verwendbare Schweißautomaten weisen üblicherweise ein Fahrgestell mit einer Schweißeinrichtung und mit Andrückeinrichtungen für die zu verschweißenden Ränder der Materialbahnen auf. Als Schweißeinrichtung können bekannte, für diesen Zweck geeignete Heißluft- oder Heizkeilschweißgeräte, oder Kombinationen solcher Schweißgeräte, verwendet werden.

Dichtungsbahnen, beispielsweise zum Abdichten von Flachdächern werden beim Verlegen auf dem Dach im Wesentlichen parallel zueinander ausgerollt. Dabei werden die Bahnen üblicherweise so verlegt, dass jeweils der Rand der zuerst verlegten Materialbahn von dem Rand der danach verlegten Materialbahn übergriffen wird. Die flachseitig aneinander anliegenden Ränder bestimmen eine Überlappungszone, in der die Materialbahnen wasserdicht miteinander zu verbinden sind. Hierzu wird entlang der Überlappungszone in der Regel ein angetriebener Schweißautomat bewegt, das mit einer konstanten, von einer Antriebseinheit des Schweißautomaten vorgegebenen Geschwindigkeit, entlang der Überlappungszone fährt.

Dabei entsteht das Problem, dass trotz genauer Ausrichtung des Schweißautomaten bezüglich der Überlappungszone bei Beginn des Schweißvorganges die Spur des Schweißautomaten nicht immer parallel zu der Kante der überlappenden Materialbahn verläuft. Dabei besteht die Gefahr, dass die Schweißnaht je nach Genauigkeit beim Verlegen der Materialbahnen über ihre gesamte Länge eine sich verändernde Schweißnahtbreite aufweisen kann. Dies mindert die Qualität der Schweißnaht, so dass die Dachabdichtung mit der Zeit undicht werden kann. Für eine optimale Schweißnaht führt dies dazu, dass die Ausrichtung des Schweißautomaten hinsichtlich der Kante der oberen Materialbahn immer wieder korrigiert werden muss. Dies übernimmt in der Regel eine Bedienperson, die den Schweißautomat manuell lenkt. Nachteilig ist dabei, dass die Bedienperson den Schweißautomaten dazu permanent überwachen muß.

Der Erfindung liegt die Aufgabe zugrunde, ein Schweißverfahren sowie einen Schweißautomat vorzuschlagen, der die Herstellung der Schweißnahtverbindung zwischen den Materialbahnen erleichtert und gleichzeitig eine Verbesserung der Schweißnahtqualität gewährleistet.

Diese Aufgabe wird erfindungsgemäß durch ein Schweißverfahren mit den Merkmalen des Anspruchs 1 sowie durch einen Schweißautomaten mit den Merkmalen des nebengeordneten Anspruchs 6 gelöst. Weitere vorteilhafte Ausgestaltungen sind den jeweils rückbezogenen Unteransprüchen zu entnehmen.

Gemäß der Erfindung wird bei dem vorgeschlagenen Verfahren mittels einer an dem Schweißautomaten angeordneten Markierungseinrichtung entlang der Kante der überlappenden Materialbahn eine temporäre, sich mitbewegende, sich stets parallel d.h. direkt anschließend oder stets gleich beabstandet zu der Kante des überlappenden Randes erstreckende Leitmarkierung für den Schweißautomat auf der überlappten Materialbahn erzeugt. Mittels der Leitmarkierung wird die Bewegungsbahn des Schweißautomaten vorgegeben, in dem die Leitmarkierung während der Bewegung des Schweißautomaten mit einer Sensoreinrichtung erfasst wird. Dazu wird die Leitmarkierung vorzugsweise in Schweißrichtung vor dem Schweißautomaten erzeugt und abgetastet. Dabei wird ein Steuersignal für eine Anzeigeeinheit und/oder für eine Lenkeinheit des Fahrgestells gebildet, das sich beim Abweichen des Schweißautomaten von der von der Leitmarkierung vorgegebenen Bewegungsbahn verändert. Mittels dem Steuersignal ist das Fahrgestell mittels einer geeigneten Lenkeinheit immer genau entlang der von der erzeugten Leitmarkierung vorgegebenen Bewegungsbahn automatisch oder von Hand gelenkt bewegbar, so dass die Schweißnahtbreite über die gesamte Schweißnahtlänge unverändert bleibt. Insbesondere verläuft dabei die Bewegungsbahn des Schweißautomaten und damit die Schweißnaht immer parallel zu der Kante der überlappenden Materialbahn.

Die Leitmarkierung weist dabei gegenüber den Materialbahnen und vorzugsweise gegenüber dem Fahrgestell eine kleinere Länge auf. Sie bewegt sich mit dem Schweißautomaten mit und verbleibt nach dem Schweißvorgang nicht als Leitlinie auf der unteren Materialbahn. Da die Bedienperson die Ausrichtung des Schweißautomaten nicht mehr selbst überprüfen und diesen manuell ausrichten muss, sondern dies automatisch geschieht, steigt die Bedienerfreulichkeit und die mögliche Schweißgeschwindigkeit gegenüber herkömmlichen Schweißautomaten und bekannten Schweißverfahren. Außerdem besteht die Möglichkeit, die maximale Schweißgeschwindigkeit weiter zu erhöhen.

Vorteilhafterweise wird die Überlappungszone aus Richtung der überlappenden Materialbahn mit einer Lichtquelle als Markierungseinrichtung beleuchtet und damit ein von der Kante der überlappenden Materialbahn ausgehender Schlagschatten auf der überlappten Materialbahn erzeugt, der als Leitmarkierung dient. Der Schlagschatten schließt unmittelbar an die Kante des oberen Randes der überlappenden Materialbahn auf der überlappten Materialbahn an. Als Lichtquelle kann prinzipiell jede Art von Leuchtmitteln verwendet werden, die helles Licht ausstrahlen. Bevorzugt werden weiße Leuchtdioden oder Laserdioden verwendet.

Dementsprechend wird vorzugsweise ein opto-elektronischer Sensor als Sensoreinrichtung verwendet, der an die Art des Leuchtmittels angepasst ist. Die Beleuchtungsstärke der Lichtquelle und die Integrationszeit des Sensors sind vor und während des Schweißvorgangs an die gegenwärtig zu verbindenden Materialbahnen anpassbar, um einen optimalen Kontrast zu erhalten. Um bei einer weiß strahlenden Lichtquelle den optimalen Kontrast der Leitmarkierung gegenüber den Materialbahnen für die Abtastung durch den Sensor zu erreichen, können auf die Farbe der Planen abgestimmte Spektralfilter vor dem optoelektronischen Sensor auswechselbar angebracht sein. Für die Steigerung der Beleuchtungsstärke kann die Lichtquelle auch gepulst werden. Dabei kann die Überlappungszone permanent oder nur in den Zeitintervallen erfasst werden, in denen die Leitmarkierung erzeugt wird. Besonders vorteilhaft und zweckmäßig ist es, wenn die Lichtquelle und der Sensor synchron getaktet werden.

Schweißautomaten der vorstehend beschrieben Art werden in Recht unterschiedlichen Umgebungen und bei verschiedensten Lichtverhältnissen eingesetzt. Dabei muss sichergestellt sein, dass Störlicht die Erkennung der Leitmarkierung und damit der Kante der überlappenden Materialbahn nicht erschwert oder verhindert. So können unter Umständen bei Applikationen auf dem Dach die Sonne oder Scheinwerfer störende Reflexionen auf glänzenden Materialbahnen verursachen oder bei Anwendungen in Gebäude Fremdlicht von Lampen oder Neonröhren die Erkennung beeinträchtigen. Bei dem erfindungsgemäßen Verfahren wird idealerweise die Überlappungszone im Markierungsbereich der Markierungseinrichtung von Störlicht aus der Umgebung mittels einer am Fahrgestell vorgesehenen Abschattungsrichtung geschützt. Damit hebt sich die Leitmarkierung gut von der überlappten Materialbahn und von dem Rand der überlappenden Materialbahn ab. Die Leitmarkierung kann damit problemlos mit der Sensoreinrichtung detektiert werden.

Gemäß der Erfindung weist der vorgeschlagene Schweißautomat eine beispielsweise an dem Fahrgestell angeordnete Markierungseinrichtung auf, mittels der entlang der Kante der überlappenden Materialbahn eine temporäre, sich mit dem Fahrgestell mitbewegende, sich stets parallel zu der Kante erstreckende, die Bewegungsbahn des Schweißautomaten vorgebende Leitmarkierung auf der überlappten Materialbahn erzeugbar ist, und eine beispielsweise ebenfalls an dem Fahrgestell angeordnete Sensoreinrichtung, mit der die Leitmarkierung während der Bewegung des Schweißautomats erfassbar ist, so dass ein Steuersignal für eine Anzeigeeinheit und/oder eine Lenkeinheit bildbar ist, mit dem der Scheißautomat immer genau entlang der von der Leitmarkierung vorgegebenen Bewegungsbahn bewegbar ist.

Als Anzeigeeinheit kann beispielsweise eine Leuchtdiodenkette verwendet werden, die das Steuersignal visualisiert und insbesondere die Abweichung der momentanen Bewegungsbahn von der Kante der überlappenden Materialbahn in Richtung und Größe optisch darstellt. Mittels der Anzeigeeinheit ist die Bedienperson des Schweißautomaten immer genau über die Ausrichtung des Fahrgestells gegenüber der Überlappungszone informiert und kann somit in Abhängigkeit von der Abweichung falls erforderlich eingreifen. Dies erleichtert der Bedienperson das manuelle Ausrichten des Fahrgestells beim Führen des Schweißautomaten von Hand entlang der Überlappungszone. Zusätzlich kann neben der optischen Anzeige kann eine akustische Meldung hilfreich sein.

Mittels dem Steuersignal muss der vorgeschlagene Schweißautomat nicht mehr wie bisherige Schweißautomaten unbedingt von Hand den in der Überlappungszone übereinander liegenden Materialbahnen nachgeführt werden, um entlang der Kante der überlappenden Materialbahn eine Schweißnaht mit einer bestimmten Breite herzustellen. Dies schafft die Möglichkeit eines vollautomatisch arbeitenden Schweißroboters, der Materialbahnen mittels der von dem Fahrgestell mitgeführten Schweißeinrichtung thermisch, beispielsweise durch Heißgasschweißen oder Heizkeilschweißen, oder chemisch mit einem Quellschweißmittel im Wesentlichen selbstständig verbinden kann. Die Antriebseinheit kann einen Elektro-, Verbrennungs- oder einen anderen geeigneten Motor aufweisen, dem eine eigene Energieversorgungseinheit, beispielsweise eine Batterie, ein Akku oder ein Tank für einen gasförmigen oder flüssigen Treibstoff, zugeordnet sein kann. Es versteht sich von selbst, dass die Energieversorgung des Schweißautomaten auch über ein von dem Fahrgestell mitgeschlepptes Stromkabel erfolgen kann. Der Schweißautomat kann als Raupen- oder Radfahrzeug ausgebildet sein. Vorzugsweise weist er ein angetriebenes Fahrgestell mit Laufrädern auf, die zumindest teilweise mit der Antriebseinheit verbunden sind und zumindest teilweise mittels einer Lenkeinheit lenkbar sind.

In einer bevorzugten Ausführungsform der Erfindung weist die Markierungseinrichtung eine Lichtquelle zur örtlichen Beleuchtung der Überlappungszone der Materialbahnen auf. Dabei ist die Markierungseinrichtung zusammen mit der Sensoreinrichtung vorzugsweise in Schweißrichtung gesehen vorne an dem Fahrgestell angeordnet. Idealerweise ist die Lichtquelle derart an dem Fahrgestell befestigt, dass sie die Überlappungszone aus Richtung der überlappenden Materialbahn schräg beleuchtet. Damit erzeugt die Lichtquelle vorteilhafterweise einen von der Kante der überlappenden Materialbahn ausgehenden Schlagschatten auf der überlappten Materialbahn, der als Leitmarkierung dient. Der Schlagschatten grenzt unmittelbar an die obere Kante der überlappenden Materialbahn an.

Es hat sich gezeigt, dass beispielsweise weißstrahlende Leuchtdioden aufgrund ihrer breiten Spektralemission oder Laserdioden aufgrund ihre starken gerichteten Lichtemission als Lichtquelle besonders geeignet sind. Die Lichtausbeute und die Lebensdauer solcher Dioden lässt sich noch verbessern, in dem diese gepulst betrieben werden. Selbstverständlich kann als Lichtquelle auch jedes andere geeignete Leuchtmittel mit ausreichender Helligkeit verwendet werden.

Zur Erfassung der Leitmarkierung wird bei dem erfindungsgemäßen Schweißautomaten in einer Ausführungsform ein opto-elektronischer Sensor eingesetzt, mit der die Leitmarkierung in der Überlappungszone erfasst wird. Vorzugsweise wird dabei die Schlagschattengrenze zu der Kante der beleuchteten überlappenden Materialbahn detektiert und zur Bildung des Steuersignals für die Antriebseinheit herangezogen.

Dazu kann ein sich eindimensional oder zweidimensional erstreckender optischer Sensor senkrecht oder in einem Winkel zur der Überlappungszone positioniert sein. Der Sensor kann als eindimensionale Zeilenkamera oder als zweidimensionale Sensorarray, beispielsweise mit einem CCD- oder CMOS-Chip ausgeführt sein. Aus dem Winkel und der Richtung, in der eine gedachte mittlere Längsachse des Schweißautomaten von der als Übergang vom abgeschatteten Teil der überlappten zu dem erhellten Teil der überlappenden Materialbahn erfassten Kante des überlappenden Randes von der Leitmarkierung und damit von der gewünschten Bewegungsbahn abweicht, lässt sich kontinuierlich oder in vorgegebenen zeitlichen Abständen mit einer Rechnereinheit mit Mikroprozessor das Steuersignal zur Korrektur der Bewegungsbahn ableiten. Aus den tendenziellen und der absoluten Abweichung wird ein Korrekturfaktor ermittelt, und an ein Stellglied weitergeleitet, welches die Ausrichtung des Schweißautomaten zu der Kante der überlappenden Materialbahn automatisch selbstständig korrigiert. Vorzugsweise sind die Sensoreinrichtung und die Markierungeinrichtung deswegen in einem unterschiedlichen seitlichen Abstand zu der Leitmarkierung und damit zu der Kante der überlappenden Materialbahn angeordnet, wobei die Sensoreinrichtung die Leitmarkierung zur genauen Lokalisierung vorzugsweise senkrecht von oben abtastet. Damit kann die Kante der oberen Materialbahn problemlos, sehr genau und sicher erfasst werden.

Zur automatischen Korrektur der Bewegungsbahn weist die Antriebseinheit bevorzugt eine Lenkeinheit auf, die mit dem Steuersignal der Sensoreinrichtung beeinflussbar ist. Das Lenken des Schweißautomaten erfolgt dabei beispielsweise durch Beschleunigen oder Abbremsen eines vorderen oder hinteren Laufrades des Fahrgestells oder durch Schwenken eines lenkbaren, vorne oder hinten an dem Fahrgestell angebrachten Führungs- oder Antriebsrades.

Starkes Fremdlicht, das schräg auf die Überlappungszone auffällt, kann speziell bei hellen oder glänzenden Materialbahnen die Funktion der Markierungseinrichtung oder/oder der Sensoreinrichtung stören. Der Helligkeitsunterschied der Leitmarkierung gegenüber den Materialbahnen fällt dabei geringer aus und kann von der Sensoreinrichtung damit schlechter erfasst werden. Außerdem kann Störlicht direkt auf das Abtastfenster der Sensoreinrichtung reflektiert werden, wodurch die Abtastung der Leitmarkierung erschwert oder gänzlich verhindert wird.

Zur sicheren Erkennung der Leitmarkierung weist der Schweißautomat eine Abschattungseinrichtung, vorzugsweise eine Schutzhaube gegen Störlicht auf, die die Markierungs- und die Sensoreinrichtung gemeinsam um- oder übergreifend an dem Fahrgestell angeordnet ist. Die Schutzhaube dunkelt den Markierungsbereich um die Überlappungszone ab und schützt diesen zusätzlichvor Störlicht. So kann bei einer Beleuchtung der Überlappungszone mit einer weiß strahlenden Lichtquelle die Erkennung der Kante der überlappenden Materialbahn unabhängig von der Farbgebung der Materialbahnen sicher erfolgen. Dazu weist die Schutzhaube vorteilhafterweise eines seitliche Wandung auf, die sich zu den Materialbahnen hin erstreckt und direkte Reflexionen einer fernen Lichtquelle auf den lichtempfindlichen Sensor verhindert.

Nachfolgend wird die Erfindung anhand eines Ausführungsbeispiels näher erläutert. Weitere Merkmale der Erfindung ergeben sich aus den beigefügten Zeichnungen und der Beschreibung des Ausführungsbeispiels in Verbindung mit den Ansprüchen. Die einzelnen Merkmale der Erfindung können für sich allein oder zu mehreren bei verschiedenen Ausführungsformen der Erfindung realisiert sein. In einer schematischen Darstellung zeigen:
- Figur 1: einen erfindungsgemäßen Schweißautomaten in Seitenansicht;

- Figur 2: die Markierungs- und Sensoreinrichtung des Schweißautomats aus Figur 1 während der Erzeugung der temporären Leitmarkierung auf der Überlappungszone.

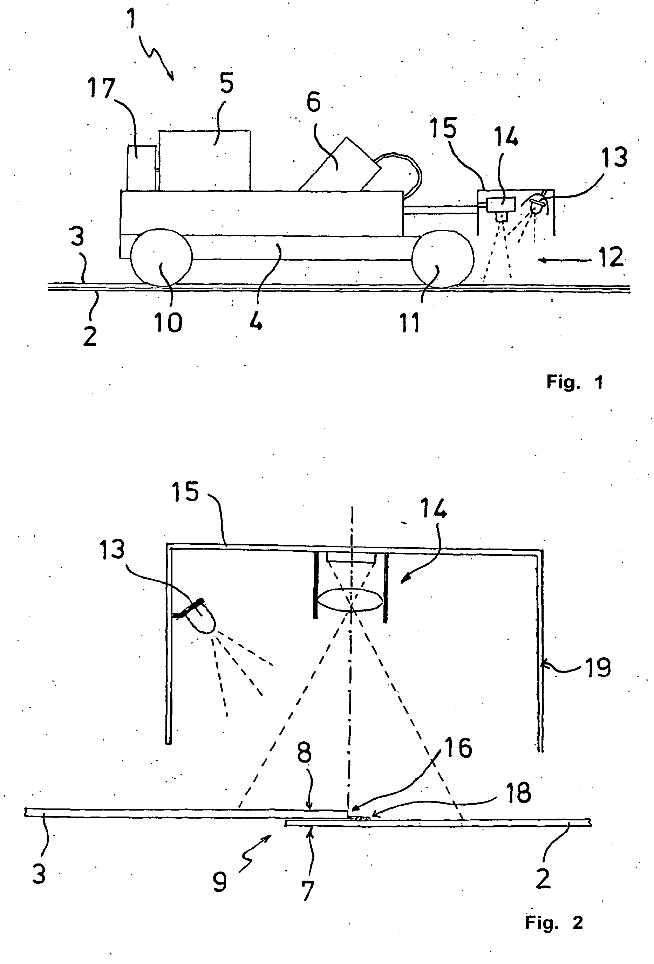

Figur 1 zeigt einen erfindungsgemäßen Schweißautomaten 1 zum Verbinden von nebeneinander angeordneten, seitlich überlappenden Materialbahnen 2, 3, mit einem angetriebenen Fahrgestell 4 und daran angeordneter Antriebseinheit 5 und Schweißeinrichtung 6. Zusätzlich ist eine nicht dargestellte und entweder in der Antriebseinheit integrierte oder verbundene oder getrennte Lenkeinheit zur Lenkung des Schweißautomaten 1 vorgesehen. Mit der Schweißeinrichtung 6 können die Materialbahnen 2, 3, wie aus Figur 2 ersichtlich, an den sich überlappenden Rändern 7, 8 in einer Überlappungszone 9 miteinander verschweißt werden. Die Antriebseinheit 5 weist in Schweißrichtung gesehen, vordere Stützräder 11 und hintere Antriebsräder 10 auf, wobei die Lenkung des Schweißautomaten 1 über die Stützräder 10 erfolgt. Mit der Antriebseinheit 5 kann der Schweißautomat 1 entlang der Überlappungszone 9 mit gleichförmiger Geschwindigkeit zum Verbinden der Materialbahnen 2, 3 bewegt werden.

An dem vorderen Ende 12 des Fahrgestells 4, an dem auch die Stützräder 11 vorgesehen sind, sind die Markierungseinrichtungen 13 in Form einer Lichtquelle und die Sensoreinrichtung 14 in Form einer einzeiligen Zeilenkamera mit vertikalem Abstand zu Materialbahnen 2, 3 angeordnet. Die Lichtquelle 13 und die Zeilenkamera 14 werden von einer Schutzhaube 15 als Abschattungseinrichtung gemeinsam übergriffen, die sich in vertikaler Richtung zu der Überlappungszone 9 hin erstreckt. Die Schutzhaube 15 schützt die Zeilenkamera 14 sowie die Materialbahnen 2, 3 unterhalb der Abdeckhaube 15 vor störendem Fremdlicht.

Figur 2 zeigt die Markierungseinrichtung 13 sowie die Sensoreinrichtung 14 mit Blick in Schweißrichtung. Das Fahrgestell 4 des Schweißautomaten 1 ist in der Figur 2 nicht dargestellt. Die zu verbindenden Materialbahnen 2, 3 sind mit überlappenden Rändern 7, 8 zueinander verlegt. Die obere Materialbahn 3 übergreift mit ihrem Rand 8 den Rand 7 der unteren Materialbahn 2. In der weiteren Beschreibung wird die untere Materialbahn 2 als überlappte und die obere Materialbahn 3 als überlappende Materialbahn bezeichnet.

Die Ränder 7, 8 der Materialbahnen 2, 3 bestimmen die Überlappungszone 9, in der die überlappende Materialbahn 3 mit der überlappten Materialbahn 2 mit gleichmäßiger Schweißnahtbreite zu verschweißen ist. Da die Überlappungszone 9 nur eine bestimmte Breite aufweist, muss der Schweißautomat 1 möglichst genau parallel zu der Kante 16 an dem Rand 8 der überlappenden Materialbahn 3 geführt werden. Dazu weist, wie aus Figur 1 ersichtlich, der Schweißautomat 1 eine zentrale Steuereinheit 17 auf, die mindestens eines der Stützräder 11 seitlich dreht, um die Ausrichtung des Fahrgestells 4 zu ermöglichen und somit der Bewegungsbahn des Schweißautomaten 1 an den Verlauf der Kante 16 anzupassen. Alternativ können auch die beiden Stützräder 11 mit separaten Motoren angetrieben sein, die durch eine unterschiedliche Geschwindigkeit die Ausrichtung des Fahrgestells 4 ermöglichen. Die zentrale Steuereinheit 17 wird von der Sensoreinrichtung 14 mit einem Steuersignal versorgt, das die Abweichung der Bewegungsbahn des Schweißautomaten 1 von der Kante 16 der überlappenden Materialbahn 3 ausweist.

Die Kante 16 des überlappenden Randes 8 ist an sich bei diffuser Beleuchtung von der Zeilenkamera 14 schwierig abzutasten, da kein ausreichender Kontrast zwischen Materialbahnen 2, 3 vorhanden ist. Der für eine sichere Erkennung der Kante 16 notwendige Kontrast wird mit einer Leitmarkierung 18 hergestellt. Wenn helles Licht von der Lichtquelle 13 aus Richtung der überlappenden Materialbahn 3 in einem bestimmten Winkel gerichtet auf die Überlappungszone 9 fällt, entsteht ein von der Kante 16 ausgehender Schlagschatten 18, der sich in Richtung der überlappten Materialbahn 2 entlang des überlappten Randes 7 erstreckt. Die Hell-/Dunkelgrenze zwischen dem Schlagschatten 18 und dem erhellten oberen Rand 8 der überlappenden Materialbahn 3 wird sicher von der Zeilenkamera 14 erkannt.

Zur optimalen Erkennung der Leitmarkierung 18 tastet die Zeilenkamera 14 die Überlappungszone 9 senkrecht von oben ab, wobei die Lichtquelle 13 seitlich von der Zeilenkamera 14 angeordnet ist und die Überlappungszone 9 schräg von oben beleuchtet. Damit kann ein möglichst breiter und scharfer Schlagschatten 18 als Leitmarkierung entlang der Kante 16 der überlappenden Materialbahn erzeugt werden. Die Leitmarkierung 18 ist als Lichtmarkierung temporär und bewegt sich mit dem Schweißautomaten 1 zusammen entlang der Überlappungszone 9, da die Lichtquelle 13 an dem Fahrgestell 4 angebracht ist. Die Schutzhaube 15, die die Überlappungszone 9 zumindest um die Leitmarkierung 18 herum vor Störlicht schützt, ist topfförmig ausgebildet. Sie übergreift die Lichtquelle 13 und die Zeilenkamera 14 gemeinsam. Dabei reicht die Seitenwand 19 der Schutzhaube 15 ein Stück weit bis an die Materialbahnen 2, 3 heran und verhindert im abgeschatteten Schutzbereich von Störlicht ausgehende Reflexionen in der Überlappungszone 9.

## Patentansprüche

1. Verfahren zum Verbinden mit überlappenden Rändern (7, 8) angeordneten Materialbahnen (2, 3) bei dem ein Schweißautomat (1), der ein Fahrgestell (4), eine Antriebseinheit (5) und eine Schweißeinrichtung (6) aufweist, entlang der Überlappungszone (9) der zu verbindenden Materialbahnen (2, 3) geführt wird und dabei die zu verbindenden Ränder (7, 8) von der Schweißeinrichtung (6) miteinander verbunden werden, **dadurch gekennzeichnet, dass** mittels einer an dem Schweißautomat (1) angeordneten Markierungseinrichtung (13) entlang der Kante (16) der überlappenden Materialbahn (3) eine temporäre, sich mit dem Fahrgestell (4) bewegende, die Bewegungsbahn des Schweißautomaten (1) vorgebende Leitmarkierung (18) auf der überlappten Materialbahn (2) erzeugt und die Leitmarkierung (18) während der Bewegung des Schweißautomaten (1) mit einer Sensoreinrichtung (14) erfasst wird, wobei ein Steuersignal für eine Anzeigeeinheit und/oder für eine Lenkeinheit gebildet wird und mittels des Steuersignals der Schweißautomat (1) immer genau entlang der von der erzeugten Leitmarkierung (18) vorgegebenen Bewegungsbahn bewegbar ist.

2. Verfahren nach Anspruch 1, **dadurch gekennzeichnet, dass** die Überlappungszone (9) aus Richtung der überlappenden Materialbahn (3) mit einer Lichtquelle (13) als Markierungseinrichtung (13) beleuchtet und damit ein von der Kante (16) der überlappenden Materialbahn (3) ausgehender Schlagschatten (18) auf der überlappten Materialbahn (2) erzeugt wird, der als Leitmarkierung (18) dient.

3. Verfahren nach Anspruch 1 oder 2, **dadurch gekennzeichnet, dass** als Sensoreinrichtung (14) ein opto-elektronischer Sensor (14) verwendet wird.

4. Verfahren nach Anspruch 2 oder 3, **dadurch gekennzeichnet, dass** die Lichtquelle (13) und der Sensor (14) synchron getaktet werden.

5. Verfahren nach einem der vorangegangenen Ansprüche, **dadurch gekennzeichnet, dass** die Überlappungszone (9) im Markierungsbereich der Markierungseinrichtung (13) von Störlicht aus der Umgebung mittels einer am Fahrgestell (4) vorgesehenen Abschattungseinrichtung (15) geschützt wird.

6. Schweißautomat (1) zum Verbinden mit überlappenden Rändern (7, 8) angeordneten Materialbahnen (2, 3), mit einem Fahrgestell (4), einer Antriebseinheit (5) und einer Schweißeinrichtung (6), wobei das Fahrgestell (4) entlang der Überlappungszone (9) der zu verbindenden Materialbahnen (2, 3) führbar und dabei die zu verbindenden Ränder (7, 8) mittels der Schweißeinrichtung (6) verbindbar sind, **gekennzeichnet durch** eine Markierungseinrichtung (13), mittels der entlang der Kante (16) der überlappenden Materialbahn (3) eine temporäre, sich mit dem Fahrgestell (4) mitbewegende, die Bewegungsbahn des Schweißautomaten (1) vorgebende Leitmarkierung (18) auf der überlappten Materialbahn (2) erzeugbar ist, und eine Sensoreinrichtung (14), mit der die Leitmarkierung (18) während der Bewegung des Schweißautomaten (1) erfassbar ist, so dass ein Steuersignal für eine Anzeigeeinheit und/oder für eine Lenkeinheit bildbar ist, mit dem der Schweißautomat (1) immer genau entlang der von der Leitmarkierung (18) vorgegebenen Bewegungsbahn bewegbar ist.

7. Schweißautomat nach Anspruch 6, **dadurch gekennzeichnet, dass** die Markierungseinrichtung (13) eine Lichtquelle (13) zur örtlichen Beleuchtung der Überlappungszone (9) der Materialbahnen (2, 3) aufweist, die vorzugsweise die Überlappungszone (9) aus Richtung der überlappenden Materialbahn (3) schräg beleuchtet, und der entlang der Kante (16) gebildete Schlagschatten (18) als Leitmarkierung (18) dient.

8. Schweißautomat nach einem der vorangegangenen Ansprüche 6 oder 7, **dadurch gekennzeichnet, dass** als Sensoreinrichtung (14) ein opto-elektronischer Sensor (14) verwendet ist.

9. Schweißautomat nach einem der vorangegangenen Ansprüche 6 bis 8, **dadurch gekennzeichnet, dass** die Markierungseinrichtung (13) und die Sensoreinrichtung (14) einen unterschiedlichen seitlichen Abstand zu der Leitmarkierung (18) aufweisen, wobei die Sensoreinrichtung (14) die Leitmarkierung (18) vorzugsweise senkrecht von oben abtastet.

10. Schweißautomat nach einem der vorangegangenen Ansprüche 6 bis 9, **dadurch gekennzeichnet, dass** die Antriebseinheit (5) eine Lenkeinheit aufweist, die mit dem Steuersignal der Sensoreinrichtung (14) beeinflussbar ist.

11. Schweißautomat nach einem der vorangegangenen Ansprüche 6 bis 10, **dadurch gekennzeichnet, dass** der Schweißautomat (1) eine Abschattungseinrichtung (15), vorzugsweise eine Schutzhaube (15) gegen Störlicht aufweist, die die Markierungseinrichtung (13) und die Sensoreinrichtung (14) gemeinsam um- oder übergreifend an dem Fahrgestell (4) angeordnet ist, wobei die Abschattungseinrichtung (15) eines seitliche Wandung (19) aufweist, die sich zu den Materialbahnen (2, 3) hin erstreckt.

## Claims

1. Method for connecting material webs (2, 3) arranged with overlapping edges (7, 8) in which an automatic welder (1) which has a carriage (4), a drive unit (5) and a welding device (6), is guided along the overlapping zone (9) of the material webs (2, 3) to be connected, whereby the edges (7, 8) to be connected are connected to each other by the welding device (6), **characterised in that** a temporary guide marking (18) moving with the carriage (4) along the edge (16) of the overlapping material web (3) and prescribing the movement track of the automatic welder (1) is generated on the overlapped material web (2) by means of a marking device (13) arranged on the automatic welder (1), and the guide marking (18) is detected during the movement of the automatic welder (1) by a sensor device (14) whereupon a control signal is produced for a display unit and/or for a steering unit and the automatic welder (1) is always movable precisely along the movement track prescribed by the generated guide marking (18) by means of the control signal.

2. Method according to claim 1, **characterised in that** the overlapping zone (9) is illuminated from the direction of the overlapping material web (3) with a light source (13) as marking device (13) and a hard shadow (18) starting from the edge (16) of the overlapping material web (3) is generated on the overlapped material web (2), which serves as guide marking (18).

3. Method according to claim 1 or 2, **characterised in that** an opto-electronic sensor (14) is used as sensor device (14).

4. Method according to claim 2 or 3, **characterised in that** the light source (13) and the sensor (14) are synchronously clocked.

5. Method according to one of the preceding claims **characterised in that** the overlapping zone (9) is protected in the marking area of the marking device (13) from stray light from the environment by means of a shutter device (15) provided on the carriage (4).

6. Automatic welder (1) for connecting material webs (2, 3) arranged with overlapping edges (7, 8), having a carriage (4), a drive unit (5) and a welding device (6), the carriage (4) being guidable along the overlapping zone (9) of the material webs (2, 3) to be connected and the edges (7,8) to be connected being connectable by means of the welding device (6), **characterised by** a marking device (13) by means of which a temporary guide marking (18), moving together with the carriage (4) and prescribing the movement track of the automatic welder (1) can be generated on the overlapped material web (2) along the edge (16) of the overlapping material web (3), and a sensor device (14) with which the guide marking (18) can be detected during the movement of the automatic welder (1), so that a control signal for a display unit and/or for a steering unit can be produced, with which the automatic welder (1) is always movable precisely along the movement track prescribed by the guide marking (18).

7. Automatic welder according to claim 6, **characterised in that** the marking device (13) has a light source (13) for local illumination of the overlapping zone (9) of the material webs (2, 3), which preferably illuminates the overlapping zone (9) from the direction of the overlapping material web (3) at an angle, and the hard shadow (18) produced along the edge (16) serves as guide marking (18).

8. Automatic welder according to one of the preceding claims 6 or 7, **characterised in that** an opto-electronic sensor (14) is used as sensor device (14).

9. Automatic welder according to one of the preceding claims 6 to 8, **characterised in that** the marking device (13) and the sensor device (14) have a different lateral distance from the guide marking (18), with the sensor device (14) preferably scanning the guide marking (18) vertically from above.

10. Automatic welder according to one of the preceding claims 6 to 9, **characterised in that** the drive unit (5) has a steering unit which can be influenced by the control signal from the sensor device (14).

11. Automatic welder according to one of the preceding claims 6 to 10, **characterised in that** the automatic welder (1) has a shutter device (15), preferably a protective hood (15) against stray light, which is arranged on the carriage (4) jointly surrounding or overlapping the marking device (13) and the sensor device (14), while the shutter device (15) has a lateral wall (19) which extends to the material webs (2, 3).

## Revendications

1. Procédé de liaison de bandes de matériau (2, 3) à bords chevauchants (7, 8), dans lequel un appareil (1) de soudage automatique, comprenant un châssis de roulement (4), une unité d'entraînement (5) et un dispositif de soudage (6), est guidé le long de la zone de chevauchement (9) des bandes de matériau (2, 3) à solidariser, les bords (7, 8) à relier étant alors solidarisés par ledit dispositif de soudage (6), **caractérisé par le fait qu'**un repère temporaire de guidage (18), se mouvant avec le châssis de roulement (4) et préétablissant la trajectoire de mouvement de l'appareil (1) de soudage automatique, est ménagé sur la bande de matériau (2) chevauchée, le long de l'arête (16) de la bande de matériau (3) chevauchante, au moyen d'un système de repérage (13) disposé sur ledit appareil (1) de soudage automatique, et ledit repère de guidage (18) est détecté par un dispositif de détection (14) au cours du mouvement dudit appareil (1) de soudage automatique, un signal de commande étant formé à destination d'une unité d'affichage et/ou d'une unité de guidage, et ledit appareil (1) de soudage automatique pouvant être mû avec précision constante, au moyen dudit signal de commande, le long de la trajectoire de mouvement préétablie par ledit repère de guidage (18) ménagé.

2. Procédé selon la revendication 1, **caractérisé par le fait que** la zone de chevauchement (9) est éclairée, à partir de la direction de la bande de matériau (3) chevauchante, à l'aide d'une source lumineuse (13) constituant un système de repérage (13), ce qui génère, sur la bande de matériau (2) chevauchée, une ombre portée (18) remplissant la fonction d'un repère de guidage (18) et partant de l'arête (16) de ladite bande de matériau (3) chevauchante.

3. Procédé selon la revendication 1 ou 2, **caractérisé par le fait qu'**un capteur optoélectronique (14) est utilisé en tant que dispositif de détection (14).

4. Procédé selon la revendication 2 ou 3, **caractérisé par le fait que** la source lumineuse (13) et le capteur (14) sont actionnés selon des cycles synchrones.

5. Procédé selon l'une des revendications précédentes, **caractérisé par le fait que** la zone de chevauchement (9) est protégée d'une lumière perturbatrice provenant de l'environnement, dans la zone de repérage du système de repérage (13), au moyen d'un système d'occultation (15) prévu sur le châssis de roulement (4).

6. Appareil (1) de soudage automatique conçu pour relier des bandes de matériau (2, 3) à bords chevauchants (7, 8), comprenant un châssis de roulement (4), une unité d'entraînement (5) et un dispositif de soudage (6), ledit châssis de roulement (4) pouvant être guidé le long de la zone de chevauchement (9) des bandes de matériau (2, 3) à solidariser, et les bords (7, 8) à relier pouvant alors être solidarisés au moyen du dispositif de soudage (6), **caractérisé par** un système de repérage (13) au moyen duquel un repère temporaire de guidage (18), se mouvant conjointement au châssis de roulement (4) et préétablissant la trajectoire de mouvement de l'appareil (1) de soudage automatique, peut être ménagé sur la bande de matériau (2) chevauchée, le long de l'arête (16) de la bande de matériau (3) chevauchante ; et par un dispositif de détection (14) par lequel ledit repère de guidage (18) peut être détecté au cours du mouvement dudit appareil (1) de soudage automatique, ce qui permet de former, à destination d'une unité d'affichage et/ou d'une unité de guidage, un signal de commande par lequel ledit appareil (1) de soudage automatique peut être mû, avec précision constante, le long de la trajectoire de mouvement préétablie par ledit repère de guidage (18).

7. Appareil de soudage automatique selon la revendication 6, **caractérisé par le fait que** le système de repérage (13) présente une source lumineuse (13) assignée à l'éclairage localisé de la zone de chevauchement (9) des bandes de matériau (2, 3) et provoquant, de préférence, l'éclairage oblique de ladite zone de chevauchement (9) à partir de la direction de la bande de matériau (3) chevauchante ; et l'ombre portée (18), formée le long de l'arête (16), sert de repère de guidage (18).

8. Appareil de soudage automatique selon l'une des revendications précédentes 6 ou 7, **caractérisé par le fait qu'**un capteur optoélectronique (14) est utilisé en tant que dispositif de détection (14).

9. Appareil de soudage automatique selon l'une des revendications précédentes 6 à 8, **caractérisé par le fait que** le système de repérage (13) et le dispositif de détection (14) présentent une distance latérale différente, vis-à-vis du repère de guidage (18), ledit dispositif de détection (14) provoquant, de préférence, un balayage vertical dudit repère de guidage (18) s'opérant de haut en bas.

10. Appareil de soudage automatique selon l'une des revendications précédentes 6 à 9, **caractérisé par le fait que** l'unité d'entraînement (5) comporte une unité de guidage pouvant être influencée par le signal de commande du dispositif de détection (14).

11. Appareil de soudage automatique selon l'une des revendications précédentes 6 à 10, **caractérisé par le fait que** ledit appareil (1) de soudage automatique offre un système d'occultation (15) revêtant, de préférence, la forme d'un capot (15) de protection contre une lumière perturbatrice, qui est implanté sur le châssis de roulement (4) en entourant ou en surplombant conjointement le système de repérage (13) et le dispositif de détection (14), ledit système d'occultation (15) présentant une paroi latérale (19) s'étendant en direction des bandes de matériau (2, 3).
